# EUROPÄISCHE PATENTSCHRIFT

(11) **EP 3 144 575 B1**
(45) Veröffentlichungstag und Bekanntmachung des Hinweises auf die Patenterteilung: **21.08.2019**
(21) Anmeldenummer: 16186608.2
(22) Anmeldetag: 31.08.2016
(51) Int. Cl.: F16M 11/20, F16M 13/02, F16M 11/16

(54) **TRAGARMGELENK UND GERÄTETRAGARM**
SUPPORT ARM JOINT AND DEVICE SUPPORT ARM
ARTICULATION DE BRAS SUPPORT ET BRAS SUPPORT D'APPAREIL

(30) Priorität: 15.09.2015 DE 102015115523
(43) Veröffentlichungstag der Anmeldung: 22.03.2017
(73) Patentinhaber: Tragfreund GmbH, 98574 Schmalkalden (DE)
(72) Erfinder: Wolfram, Erik, 07745 Jena (DE); Mühlenbeck, Andreas, 36433 Bad Salzungen (DE)
(74) Vertreter: Gerstein, Hans Joachim

(56) Entgegenhaltungen:
- CN-A- 104 613 287
- TW-U- M 494 780
- US-A- 5 553 820
- US-B1- 6 367 756

## Beschreibung

Die Erfindung betrifft ein Tragarmgelenk mit einem Halteteil und einer Lagerhülse, wobei das Halteteil zur Lagerung an einem Tragarm ausgebildet ist.

Die Erfindung betrifft weiterhin einen Geräteträgerarm mit einem Tragarm und mindestens einem solchen Tragarmgelenk sowie einer an das Tragarmgelenk angebundenen Gerätehalterung.

Zur positionsveränderlichen Aufhängung von Geräten insbesondere für medizinische Anwendungen in Operationssälen werden zuverlässige, stabile und einfach zu bedienende Tragarme benötigt.

DE 10 2006 052 804 B4 offenbart eine solche Tragevorrichtung mit einem höhenverstellbaren Tragarm, welcher über ein Drehgelenk an der Decke eines Behandlungsraumes befestigt ist. An einem Kopfstück befindet sich ein nach unten verlaufendes Rohr mit einer Versorgungseinheit für medizinische Geräte.

DE 200 18 127 U1 beschreibt eine Lagerzapfenaufnahme mit einer rohrförmigen Aufnahmehülse und zwei mit der Aufnahmehülse verbundenen Wangen. Die Aufnahmehülse ist mit den Wangen verschweißt. Zur Verlängerung der Lebensdauer kann eine Verstärkungshülse an der Aufnahmehülse angebracht sein. Die Wangen können auch einstückig mit der Verstärkungshülse ausgebildet sein, die sich in den Wangen fortsetzt. Die Aufnahmehülse ist dann mittels einer teilweise umlaufenden Schweißnaht an einem Rand der Verstärkungshülse bzw. im fortgesetzten Bereich der Wangen verschweißt. Die Verstärkungshülse kann mit den Wangen und der Aufnahmehülse auch einstückig ausgebildet sein. Die Fügestellen können auch durch Verstärkung oder Verlängerung zuverlässiger gestaltet werden. Aus der CN 104613287 ist ein gattungsgemäßes Tragarmgelenk bekannt.

Damit ist ein Bruch der Lagerhülse von dem Halteteil aber immer noch nicht mit Sicherheit ausgeschlossen. Ein solches Auseinanderbrechen des Tragarmgelenkes würde zu einem Herabfallen des gehaltenen Gegenstandes führen und kann insbesondere in Operationssälen zu lebensbedrohlichen Situationen führen.

Ausgehend hiervon ist es daher Aufgabe der vorliegenden Erfindung ein verbessertes Tragarmgelenk zu schaffen.

Die Aufgabe wird durch das Tragarmgelenk mit den Merkmalen des Anspruchs 1 gelöst. Vorteilhafte Ausführungsformen sind in den Unteransprüchen beschrieben.

Es wird vorgeschlagen, dass das Halteteil des Tragarmgelenkes mindestens eine Wange und einen einstückig und fügestellenfrei mit der mindestens einen Wange geformten Rohrabschnitt hat. Eine separate Lagerhülse wird dann fügestellenfrei in dem Rohrabschnitt aufgenommen, wobei die Lagerhülse ein Anschlagelement zur Lagesicherung an dem Halteteil hat.

Durch die fügestellenfreie Anbindung der Lagerhülse an das Halteteil wird auf fehleranfällige Schweißnähte ganz verzichtet. Vielmehr wird ein Rohrabschnitt des Halteteils genutzt, um die Lagerhülse in einem Winkel von mehr als 180° zu umfassen. Damit wird die separate Lagerhülse an dem Halteteil erst einmal fixiert. Ein Herausfallen der Lagerhülse aus dem Halteteil wird dann durch ein Anschlagelement an der Lagerhülse verhindert, die einen Anschlag an dem Halteteil bildet. Mit einem solchen Anschlagelement kann wesentlich zuverlässiger als mit einer Fügestelle verhindert werden, dass sich die Lagerhülse von dem Halteteil trennt. Durch die einstückige und fügestellenfreie Ausbildung des Halteteils, welche die separate Lagerhülse fügestellenfrei in ihrem Rohrabschnitt aufnimmt, wird keine bruchanfällige Fügestelle mehr bereitgestellt. Die Lagesicherung erfolgt vielmehr durch ein Anschlagelement der Lagerhülse. Der Rohrabschnitt sollte umfangsseitig zu mindestens 210°, bevorzugt mehr als 300° und besonders bevorzugt vollumfänglich geschlossen sein. Damit wird die Lagerhülse mit ihrem Umfang an dem Halteteil kippfest gelagert und die Kraftableitung von der Lagerhülse auf das Halteteil und umgekehrt optimiert.

Die Lagerhülse ist endseitig einen über den Umfang der Lagerhülse hinausragenden Flanschring zur Bildung des Anschlagelementes haben. Dieser Flanschring ist dabei einstückig aus der Lagerhülse ausgeformt. Mit Hilfe eines solchen Flanschrings kann auf eine einfache und zuverlässige Weise verhindert werden, dass die Lagerhülse aus dem Halteteil herausrutscht. Dieser Anschlag zur Lagesicherung ist dabei unabhängig von einer sonstigen Befestigung der Lagerhülse an dem Halteteil z.B. durch eine Schraube, einen Splint oder ähnliches.

Die Lagerhülse kann einen Schlitz zur Lagesicherung eines auf die Lagerhülse aufgeschobenen Schwenkgelenkelementes mit einem in den Schlitz eintauchenden Sicherungselement haben. Mit Hilfe eines solchen Schlitzes in der Lagerhülse kann ein zur Gerätehalterung genutztes Schwenkgelenkelement, das drehbar auf die Lagerhülse aufgesteckt oder in dieses eingesteckt wird, bruchsicher und überaus zuverlässig an der Lagerhülse gesichert werden.

Das Halteteil hat zwei mit einem Freiraum voneinander beabstandete Wangen haben, die einstückig und fügestellenfrei in den Rohrabschnitt übergehen. Dieser Rohrabschnitt ist dabei vorzugsweise so ausgebildet, dass er die Lagerhülse mit einem Umfang von mehr als 180° umschließt. Dieser sich an die Wangen anschließender Rohrabschnitt ist dabei mehr als U-förmig ausgestaltet.

Damit werden bruchempfindliche Bereiche vermieden und in dem Übergang zwischen den Wangen und zum Rohrabschnitt wird ein die auftretenden Kräfte optimal aufnehmender Materialbereich geschaffen.

Die mindestens eine Wange kann eine Lageröffnung zur Aufnahme einer Lagerwelle des Tragarmes haben. Damit wird das Tragarmgelenk um die Lagerwelle schwenkbar an dem Tragarm gehalten.

Dabei ist es vorteilhaft, wenn die mindestens eine Wange weiterhin ein Gegenlager zur Anbindung eines Federelementes, wie bspw. eine Druckfeder, eine Gasfeder o.ä. hat. Der Schwenkwinkel des Tragarmgelenkes relativ zum Tragarm ist dann anpassbar. Mit Hilfe des Federelementes wird eine Haltekraft auf das Tragarmgelenk ausgeübt.

Das Halteteil kann als Strangpressprofil oder als Gussteil ausgebildet sein. Damit wird eine einfache und preiswert herzustellende und bruchfeste Gestaltung des Tragarmgelenkes sichergestellt.

Das Halteteil und die Lagerhülse sind vorzugsweise aus voneinander unterschiedlichen Materialien gebildet. Damit können das Halteteil und die Lagerhülse an die unterschiedlichen Anforderungen optimal angepasst werden.

So kann das Halteteil aus einem aluminiumhaltigen Metallmaterial, aus Stahl oder aus einem Verbundwerkstoff gebildet sein. Vorteilhaft ist z.B. eine Ausbildung aus einer Aluminiumlegierung durch Ausbildung aus einem Strangpressprofil oder einem Gussteil. Als Verbundwerkstoff eignen sich auch Faserverbundwerkstoffe, wie Kohlefaserverbünde.

Die Lagerhülse kann ein Stahlrohr, ein Aluminiumrohr oder ein aus einem Verbundwerkstoff gebildetes Rohr sein. Auch hier ist die Nutzung von Faserverbundwerkstoffen, wie bspw. Kohlefaserverbundwerkstoffen denkbar, die eine sehr leichte und stabile Ausführung des Tragarmgelenkes ermöglichen.

Die Erfindung wird nachfolgend anhand eines Ausführungsbeispiels mit den beigefügten Zeichnungen näher erläutert. Es zeigen:
- Figur 1: - Seitenansicht einer Ausführungsform eines Tragarmgelenkes;
- Figur 2: - Seitenansicht der Lagerhülse des Tragarmgelenkes aus Figur 1;
- Figur 3: - Draufsicht auf das Tragarmgelenk mit eingebauter Gegenlagerkinematik;
- Figur 4: - Frontansicht auf das Tragarmgelenk aus Figur 1.

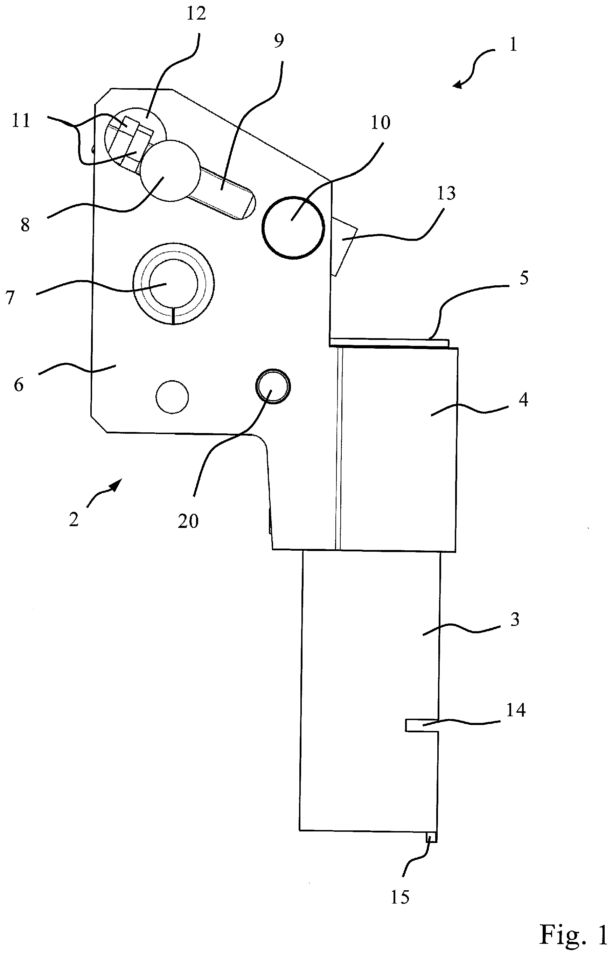

Figur 1 lässt eine Seitenansicht eines Tragarmgelenkes 1 erkennen, das ein Halteteil 2 und eine separate Lagerhülse 3 hat. Die Lagerhülse 3 ist in einen Rohrabschnitt 4 des Halteteils 2 eingeführt und von diesem Rohrabschnitt 4 umschlossen. Am oberen Ende der Lagerhülse 3 ist ein Anschlagelement 5 vorhanden, das auf dem Rohrabschnitt 4 aufliegt und einen das Herausfallen der Lagerhülse 3 aus dem Rohrabschnitt 4 verhindernden Anschlag bildet. Dieses Anschlagelement 5 ist bspw. als ein um den Umfang des Rohrabschnitts 3 umlaufender und von der Außenseite des Rohrabschnitts 3 herausstehender Flanschring ausgebildet.

Das Halteteil 2 ist einteilig aus einem Stück und fügestellenfrei ausgebildet. Es hat Wangen 6, an die sich der Rohrabschnitt 4 integral aus demselben Material und ohne Fügestellen anschließt. Die Wangen 6 können mit dem Rohrabschnitt 4 z.B. aus einem Stranggussprofil hergestellt, aus einem vollen Block ausgefräst oder gegossen sein. Geeignete Gussverfahren sind bspw. das Druckgussverfahren, insbesondere Aluminiumdruckguss, Kokillenguss oder ähnliches. Dies hängt im Wesentlichen von der Stückzahl ab.

Die Lagerhülse 3 ist als separates Teil in den Rohrabschnitt 4 eingesteckt und wird dort fügestellenfrei gehalten. Damit können Ermüdungserscheinungen einer Fügestelle nicht zu einem Bruch des Tragarmgelenkes 1 und einem Herausfallen der Lagerhülse 3 führen. Durch die Sicherung der Lagerhülse 3 mit Hilfe des Anschlagelementes 5 werden solche Schwachstellen wie bei der Anbindung der Lagerhülse 3 an das Halteteil 2 durch Fügen vermieden.

Die einander gegenüberliegenden und voneinander beabstandeten Wangen 6 werden an einem Tragarm befestigt. Hierzu sind in den Wangen 6 Lageröffnungen 7 zur Aufnahme einer Lagerwelle vorhanden. Die Einstellung des Winkels zwischen der Erstreckungsrichtung der Lagerhülse 3 und der Erstreckungsrichtung des Tragarmes erfolgt mit einem Gegenlager 8, das z.B. an eine Gasdruckfeder im Tragarm in an sich bekannter Weise angebunden ist. Die Kinematik des Gegenlagers 8 ist einstellbar. Hierzu ist eine Stellschraube 9 vorhanden, die mit einem Gegenlageranschlag 10 an den Wangen 6 angebunden ist. Das als seitlich vorstehende Zapfen ausgebildetes Gegenlager 8 kann entlang der Erstreckungsrichtung der Schraube 9 mit Hilfe von Einstellmuttern 11 verschoben werden. Die Verschieberichtung ist dabei durch einen Führungskanal 12 in den Wangen 6 vorgegeben. Zum Einstellen kann die Stellschraube 9 mit einem Betätigungswerkzeug am Stellschraubenkopf 13 verdreht werden.

Erkennbar ist weiterhin, dass die Lagerhülse 3 (Anbindungsrohr) einen Schlitz 14 hat, der zur Lagesicherung eines auf die Lagerhülse 3 aufgeschobenen Schwenkgelenkelementes dient. Hierzu greift ein Sicherungselement in den Schlitz 14 ein und legt das Schwenkgelenkelement damit an der Lagerhülse 3 fest.

Deutlich wird weiterhin, dass in dem Ausführungsbeispiel eine optionale Nase 15 an dem Ende der Lagerhülse 3 herausragt, das dem Anschlagelement 5 gegenüberliegt. Diese Nase 15 dient als Anschlag für ein aufgestecktes Schwenkgelenkelement zum Verdrehschutz.

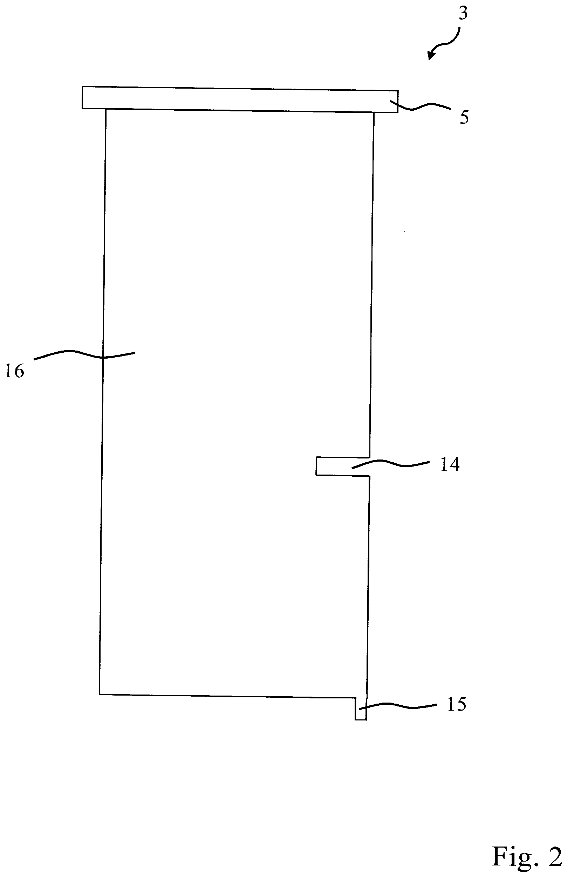

Figur 2 lässt eine Seitenansicht der Lagerhülse 3 erkennen. Deutlich wird, dass die Lagerhülse 3 einen zylinderförmigen Rohrabschnitt 16 hat, in den im unteren Bereich der Schlitz 14 eingebracht ist. Am oberen freien Ende der Lagerhülse 3 ist das Anschlagelement 5 in Form eines seitlich vorstehenden Kragens ausgebildet. Dieser Kragen wird durch einen Flanschring gebildet.

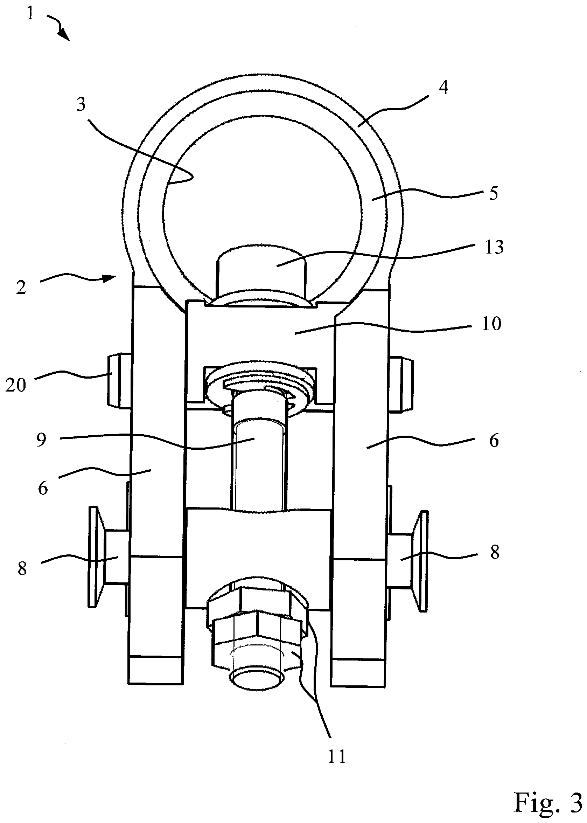

Figur 3 lässt eine Draufsicht auf das Tragarmgelenk 1 aus Figur 1 erkennen. Hierbei wird deutlich, dass das Anschlagelement 5 der Lagerhülse 3 auf der oberen Randkante des Rohrabschnitts 4 auflagert. Damit wird ein Anschlag zwischen der Lagerhülse 3 und dem Halteteil 2 bereitgestellt, der ein Herausfallen der Lagerhülse 3 verhindert. Fügestellen zur Befestigung der Lagerhülse 3 an dem Halteteil 2 sind nicht erforderlich.

Deutlich wird weiterhin, dass das Halteteil 2 einander gegenüberliegende und voneinander beabstandete Wangen 6 hat, die einstückig aus demselben Material in den Rohrabschnitt 4 übergehen. Die Lagerhülse 3 wird damit von dem Rohrabschnitt 4 umschlossen und mit einem Winkel von mehr als 180° umfasst. Vorteilhaft ist es, wenn der Rohrabschnitt 4 die Lagerhülse 3 in einem Winkel von mindestens 210° und bevorzugt von mehr als 300° umschließt. Besonders vorteilhaft ist es, wenn der Rohrabschnitt 4 die Lagerhülse 3 vollumfänglich, d.h. um 360° umschließt. Hierdurch wird die Kraftableitung von der Lagerhülse 3 auf das Halteteil 2 optimiert und vergleichmäßigt.

Erkennbar ist weiterhin, dass in dem Zwischenraum zwischen den Wangen 6 die Einstellkinematik für das Gegenlager 8 angeordnet ist. Das Gegenlager 8 ist hierbei durch seitlich von den Wangen 6 vorstehende Anschlagbolzen gebildet, die in den an den Wangen 6 anzuordnenden Tragarm (nicht dargestellt) eingreifen. Die Position des Gegenlagers 8 relativ zu dem Gegenlageranschlag 10 wird mit der Stellschraube 9 eingestellt, die an ihrem Schraubenkopf 13 gedreht werden kann. Die an dem gegenüberliegenden Ende angeordneten Sicherungsmuttern 11 (einschließlich Kontermutter) dienen als Anschlag für eine Querhülse 16, die mit den Anschlagbolzen verbunden ist und das Gegenlager 8 bildet.

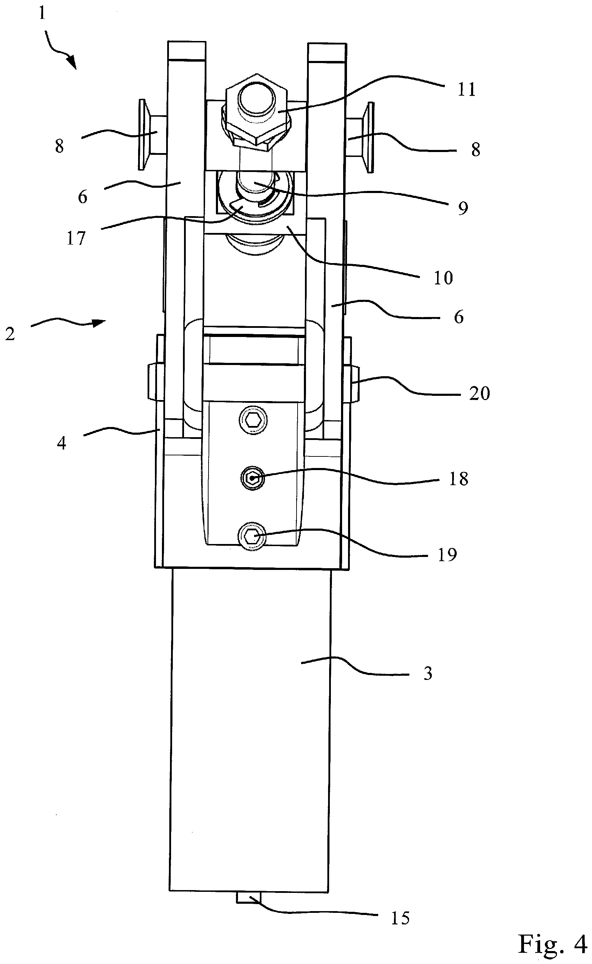

Figur 4 lässt eine Frontansicht auf das Tragarmgelenk 1 erkennen. Hier wird deutlich, dass die Stellschraube 9 mit einem Sicherungsring 17 drehbar und dennoch in Erstreckungsrichtung der Stellschraube 9 ortsfest an dem Gegenlageranschlag 10 gehalten wird.

Deutlich wird weiterhin, dass sich der Rohrabschnitt 4 an die Wangen 6 anschließt und die Lagerhülse 3 umschließt. Für die Einstellung der Tragarmkinematik ist weiterhin ein Gewindestift 18 vorhanden, der eine weitere Stellschraube bereitstellt, auf der ein Schlitten gelagert ist. Die Position des Schlittens (nicht sichtbar) kann mit der Stellschraube 9 eingestellt werden. Für die Fixierung der eingestellten Schlittenposition ist eine Sicherungsschraube 19 vorhanden, die einen Keil zwischen den Schlitten und einer Lauffläche in dem Halteteil 2 treibt.

Erkennbar ist weiterhin, dass im unteren Bereich eine weitere Lagerwelle 20 eingebracht ist.

## Patentansprüche

1. Tragarmgelenk (1) mit einem Halteteil (2) und einer Lagerhülse (3), wobei das Halteteil (2) zur Lagerung an einem Tragarm ausgebildet ist und wobei die Lagerhülse (3) ein Anschlagelement (5) zur Lagesicherung an dem Halteteil (2) hat, **dadurch gekennzeichnet, dass** das Halteteil (2) mindestens zwei mit einem Freiraum voneinander beabstandete Wangen (6) hat, die einstückig und fügestellenfrei in einen geformten Rohrabschnitt (4) übergehen, und dass die separate Lagerhülse (3) fügestellenfrei in dem Rohrabschnitt (4) aufgenommen ist, wobei die Lagerhülse (3) endseitig einen über den Umfang der Lagerhülse (3) hinausragenden Flanschring zur Bildung des Anschlagelementes (5) hat, wobei der Flanschring einstückig aus der Lagerhülse (3) ausgeformt ist.

2. Tragarmgelenk (1) nach Anspruch 1, **dadurch gekennzeichnet, dass** der Rohrabschnitt (4) umfangsseitig vollgeschlossen ist.

3. Tragarmgelenk (1) nach einem der vorhergehenden Ansprüche, **dadurch gekennzeichnet, dass** die Lagerhülse (3) einen Schlitz (14) zur Lagesicherung eines auf die Lagerhülse (3) aufgeschobenen Schwenkgelenkelementes mit einem in den Schlitz (14) eintauchenden Sicherungselement hat.

4. Tragarmgelenk (1) nach einem der vorhergehenden Ansprüche, **dadurch gekennzeichnet, dass** mindestens eine Wange (6) eine Lageröffnung (7) zur Aufnahme einer Lagerwelle des Tragarmes hat.

5. Tragarmgelenk (1) nach Anspruch 6, **dadurch gekennzeichnet, dass** mindestens eine Wange (6) ein Gegenlager (8) zur Anbindung eines Federelementes hat.

6. Tragarmgelenk (1) nach einem der vorhergehenden Ansprüche, **dadurch gekennzeichnet, dass** das Halteteil (2) als Strangpressprofil oder als Gussteil ausgebildet ist.

7. Tragarmgelenk (1) nach einem der vorhergehenden Ansprüche, **dadurch gekennzeichnet, dass** das Halteteil (2) und die Lagerhülse (3) aus voneinander unterschiedlichen Materialien gebildet sind.

8. Tragarmgelenk (1) nach einem der vorhergehenden Ansprüche, **dadurch gekennzeichnet, dass** das Halteteil (2) aus einem aluminiumhaltigen Metallmaterial, aus Stahl oder aus einem Verbundwerkstoff gebildet ist.

9. Tragarmgelenk (1) nach einem der vorhergehenden Ansprüche, **dadurch gekennzeichnet, dass** die Lagerhülse (3) ein Stahlrohr, ein Aluminiumrohr oder ein aus einem Verbundwerkstoff gebildetes Rohr ist.

10. Gerätetragarm mit einem Tragarm und an mindestens einem Ende mit einem Tragarmgelenk (1) nach einem der vorhergehenden Ansprüche und mit einer schwenkbar an der Lagerhülse (3) angeordneten Gerätehalterung.

## Claims

1. Support arm joint (1) having a holding part (2) and a bearing sleeve (3), the holding part (2) being designed for mounting on a support arm and the bearing sleeve (3) having a stop element (5) for securing the position on the holding part (2), **characterized in that** the holding part (2) has at least two cheeks (6) which are spaced apart from one another by a free space, which merge into a pipe section (4) shaped in one piece and without joints, and **in that** the separate bearing sleeve (3) is accommodated in the pipe section (4) without joints, the bearing sleeve (3) having at its ends a flange ring projecting beyond the circumference of the bearing sleeve (3) to form the stop element (5), the flange ring being formed in one piece from the bearing sleeve (3).

2. Support arm joint (1) according to claim 1, **characterized in that** the tube section (4) is fully closed on the circumferential side.

3. Support arm joint (1) according to one of the preceding claims, **characterised in that** the bearing sleeve (3) has a slot (14) for securing the position of a pivot joint element pushed onto the bearing sleeve (3) with a securing element immersed in the slot (14).

4. Support arm joint (1) according to one of the preceding claims, **characterized in that** at least one cheek (6) has a bearing opening (7) for receiving a bearing shaft of the support arm.

5. Support arm joint (1) according to claim 6, **characterized in that** at least one cheek (6) has a counter bearing (8) for connecting a spring element.

6. Support arm joint (1) according to one of the preceding claims, **characterized in that** the holding part (2) is designed as an extruded profile or as a cast part.

7. Support arm joint (1) according to one of the preceding claims, **characterized in that** the holding part (2) and the bearing sleeve (3) are formed from different materials from one another.

8. Support arm joint (1) according to one of the preceding claims, **characterized in that** the holding part (2) is formed of an aluminium-containing metal material, of steel or of a composite material.

9. Support arm joint (1) according to one of the preceding claims, **characterized in that** the bearing sleeve (3) is a steel tube, an aluminium tube or a tube formed of a composite material.

10. An apparatus support arm comprising a support arm and a support arm joint (1) according to one of the preceding claims on at least one end, and comprising an apparatus holder pivotally mounted on the bearing sleeve (3).

## Revendications

1. Articulation de bras support (1) comportant une partie de maintien (2) et une douille de palier (3), la partie de support (2) étant conçue pour être montée sur un bras support et la douille de palier (3) comportant un élément de butée (5) pour fixer la position sur la partie de support (2), **caractérisée en ce que** la partie de support (2) comporte au moins deux joues (6) qui sont séparées l'une de l'autre par un espace libre, qui se fondent d'une seule pièce et sans joints dans une section de tube profilée (4), et **en ce que** la douille de palier séparée (3) est logée sans joints dans la section de tube (4), la douille de palier (3) présentant à ses extrémités une bague de bride dépassant de la périphérie de la douille de palier (3) pour former l'élément de butée (5), la bague de bride étant formée en une pièce depuis la douille de palier (3).

2. Articulation de bras support (1) selon la revendication 1, **caractérisé en ce que** le tronçon de tube (4) est complètement fermé sur le côté circonférentiel.

3. Articulation de bras support (1) selon l'une des revendications précédentes, **caractérisée en ce que** la douille de palier (3) présente une fente (14) pour fixer la position d'un élément d'articulation pivotant poussé sur la douille de palier (3) avec un élément de fixation immergé dans la fente (14).

4. Articulation de bras support (1) selon l'une des revendications précédentes, **caractérisée en ce qu'**au moins une joue (6) présente une ouverture de palier (7) pour recevoir un arbre porteur du bras porteur.

5. Articulation de bras support (1) de bras porteur selon la revendication 6, **caractérisée en ce qu'**au moins une joue (6) présente un contre-palier (8) pour relier un élément à ressort.

6. Articulation de bras support (1) selon l'une des revendications précédentes, **caractérisé en ce que** la partie de support (2) est réalisée sous la forme d'un profilé extrudé ou d'une pièce moulée.

7. Articulation de bras support (1) selon l'une des revendications précédentes, **caractérisée en ce que** la partie de support (2) et la douille de palier (3) sont réalisées dans des matériaux différents l'un de l'autre.

8. Articulation de bras support (1) selon l'une des revendications précédentes, **caractérisé en ce que** la partie de support (2) est formée d'un matériau métallique contenant de l'aluminium, d'acier ou d'un matériau composite.

9. Articulation de bras support (1) selon l'une des revendications précédentes, **caractérisé en ce que** la douille de palier (3) est un tube en acier, un tube en aluminium ou un tube en matériau composite.

10. Un bras de support d'appareil comprenant un bras de support et, à au moins une extrémité, une articulation de bras support (1) selon l'une des revendications précédentes et comprenant un support d'appareil monté pivotant sur le douille de palier (3).
